Europäisches Patentamt

European Patent Office

Office européen des brevets

(11) Publication number: **0 376 763**
**A2**

(12) **EUROPEAN PATENT APPLICATION**

(21) Application number: 89402968.5

(22) Date of filing: 26.10.89

(51) Int. Cl.5: **A01N 1/02**

(30) Priority: 26.10.88 US 262790
25.10.89

(43) Date of publication of application:
04.07.90 Bulletin 90/27

(84) Designated Contracting States:
**AT BE CH DE ES FR GB GR IT LI LU NL SE**

(71) Applicant: **McKelvey, Karen**
**1924 West County Road E**
**Arden Hills, MN 55112(US)**

Applicant: **MacKey, John**
**1322 West 19th Street**
**Hastings, MN 55033(US)**

Applicant: **Olson, Myron**
**14359 N.E. 95th Street**
**Elk River, MN 55330(US)**

Applicant: **Holloway, Ray H.**
**3010 Creek Park Drive**
**Marietta, GA 30062(US)**

Applicant: **Kaye, Michael**
**523 Granados**
**Solana Beach, CA 92075(US)**

Applicant: **Solis, Eduardo**
**19 Windermere**
**Stukeley Meadows Huntingdon(GB)**

(72) Inventor: **McKelvey, Karen**
**1924 West County Road E**
**Arden Hills, MN 55112(US)**
Inventor: **MacKey, John**
**1322 West 19th Street**
**Hastings, MN 55033(US)**
Inventor: **Olson, Myron**
**14359 N.E. 95th Street**
**Elk River, MN 55330(US)**
Inventor: **Holloway, Ray H.**
**3010 Creek Park Drive**
**Marietta, GA 30062(US)**
Inventor: **Kaye, Michael**
**523 Granados**
**Solana Beach, CA 92075(US)**
Inventor: **Solis, Eduardo**
**19 Windermere**
**Stukeley Meadows Huntingdon(GB)**

(74) Representative: **Joly, Jean-Jacques et al**
**CABINET BEAU DE LOMENIE 55, rue**
**d'Amsterdam**
**F-75008 Paris(FR)**

(54) **A device for transportation of human organs used for transplantation.**

(57) A device for transporting an organ for transplantation. The device comprises an organ reservoir suitable for holding the organ in a sterile state during cannulation and transport of the organ, means for delivering oxygenated blood to at least one cannulated vessel of the organ such that the oxygenated blood is perfused through the tissue of the organ, and means for maintaining the organ at near-normal thermic conditions and metabolic rates during transport.

Fig. 3

# A DEVICE FOR TRANSPORTATION OF HUMAN ORGANS USED FOR TRANSPLANTATION

## Cross-reference to related U.S. Application

This document is a continuation-in-part of co-pending application Ser. No. 262,790 filed October 26, 1988.

## Technical Field

This invention relates to devices for transportation of human organs, usually between an organ donor and a transplant recipient, and methods of transporting organs utilizing such a device.

## Background of the Invention

The field of organ transplantation is one of the most exciting areas of medical science. However, despite the many technical advances that have made modern transplantation possible, a number of challenges still exist.

Organ donor supply is a major concern that is dependant upon the time that an organ can be maintained in good condition. The geographical area from which a donor organ can be selected is severely limited by the time available for transport of the organ due to rapid deterioration of organ tissue after it is removed from the donor. Typically, the time available, with prior art systems, from excise of an organ until it must be transplanted into a recipient is about four hours.

One of the keys to increasing the geographic donor base is to extend the time that an organ can be maintained ex vivo before deterioration progresses too far. The time interval between excision of the donor organ and implantation into the recipient is known as the "ischemic interval". The intent and function of most devices used for transportation of organs for transplant is to reduce the temperature of the organ. Metabolic requirements are, thus, lowered to extend the length of the ischemic interval as much as possible. This approach has its shortcomings, however, in that the nutritional needs of the organ tissue still fail to be adequately met to sufficiently deter tissue degeneration.

Many different factors must be monitored, maintained and/or manipulated to preserve an organ during transportation. These factors include blood flow volume to organ tissue, blood flow pressure, pH, $pO_2$, $pCO_2$, temperature, metabolite concentration (e.g., glucose, insulin, etc.), and electrolyte concentration (e.g. Ca, K, and Na). Since an organ may prove to be useless for transplantation if the tissue is damaged or contaminated during handling and transportation, measures should also be taken to ensure that as little tissue damage occurs during handling and transport of the organ and that the organ be maintained sterile.

As each of these parameters is more adequately monitored and maintained, the length of the ischemic interval of which a surgeon can take advantage is increased. Thus, the geographic area and number of potential donors from which a patient can receive a donor organ can be expanded.

Extension of the ischemic interval also facilitates designation of the most appropriate recipient for a given organ without regard to distance from the donor or the time required to reach the recipient, thus effecting a more equitable and efficient distribution of available organs. The additional time also allows HLA testing to be employed routinely, thus ensuring the most compatible immunological recipient environment for the organ and preventing unnecessary loss of valuable organs.

It would therefore be desirable to provide a device for transportation of organs which efficiently monitors the essential parameters for maintaining organ quality while also minimizing damage to, and contamination of, the organ tissue during handling and transport.

## Summary of the Invention

The present invention is a device for transporting an organ for transplantation. The device includes a housing in which the organ is received and held during transportation. The housing functions to maintain the organ in a sterile condition. Means are provided for delivering a nutrient-rich, oxygenated fluid to the organ so that the fluid perfuses through the organ. Finally, the device includes means for maintaining the organ at near-normal thermic conditions and metabolic rates while the organ is being transported. In the preferred embodiment, the means by which the nutrient-rich oxygenated fluid is delivered to the organ also serves to recirculate and reoxygenate fluid which has perfused through the organ. The fluid is, thereby, repeatedly perfused through the organ.

The preferred embodiment also includes means for cannulating the organ in order to facilitate introduction of the nutrient-rich, oxygenated fluid therein. Although not exclusive to the construction of the apparatus, the housing, typically, has a generally cylindrical side wall closed at opposite ends by a substantially planar floor and a substantially planar upper wall. The delivery means can comprise a flexible tube which affords passage through the upper wall of the housing to the nutrient-rich oxygenated fluid. In that embodiment, a distal end of the flexible tube carries a cannula for insertion into the organ.

In the preferred embodiment, means are provided for suspending the organ within the housing so that the organ, during transportation, does not come in contact with the walls of the housing. The flexible tube through which the nutrient-rich, oxygenated fluid is fed to the organ can perform this function.

If desired, a second flexible tube, also having a cannula mounted at its distal end, can be employed to provide further support and positioning for the organ being carried within the housing. The organ is cannulated in a manner similar to that practiced in order to effect cannulation of the flexible tube through which the nutrient-rich, oxygenated fluid is perfused into the organ. In both cases, lower ends of the cannulae can be provided with annular shoulders. In order to ensure retention of the organ on the cannulae, after the tips of the cannulae are inserted into the organ, a stitch is taken through the organ tissue above each annular shoulder to preclude retraction of the cannulae.

A third suspension location can be provided, if desired, on the downwardly facing surface of the upper wall of the housing. It is envisioned that such a location would be provided with a probe having one or more apertures formed in the lower extremity thereof. Such a probe would be triangulated with respect to the two cannulae. As a result, a suture could be passed through the tissue of the organ suspended from the cannulae and through one or more of the apertures in the end of the probe. Three-point suspension is, thereby, achieved, and the likelihood of undesirable tissue damage which might occur as a result of swinging of the organ and engagement with the wall of the housing while the organ is suspended within the housing during transportation is minimized.

In the preferred embodiment, the organ can be maintained at near normal thermic conditions and metabolic rates during transportation by employment of various system components. A primary blood circuit can include, in series, a reservoir for holding the nutrient-rich fluid, a pump for circulating the fluid, a heat exchanger for maintaining the fluid at a desired temperature, an oxygenator, a filter, a flow meter, and a pressure monitor. Fluid, after passing through the pressure monitor, would be channelled to the housing in which the organ is suspended, and the fluid would be perfused into the organ. Plumbing could be employed to recirculate the fluid from the housing back to the reservoir.

In certain embodiments of the invention, an additional pump could be employed to inject various additives into the fluid. For example, insulin and/or glucose could be injected into the fluid at the reservoir.

It may be desirable for the fluid to be renewed in the system. In such a case, an exchange pump could be interposed in the system between the housing in which the organ is suspended and the fluid reservoir. Such a pump could function to both insert new fluid and to withdraw depleted fluid.

It is desirable to employ one or more sensor probes in the path of fluid flow. Such probes can be used to ascertain that the fluid is being maintained at the right temperature, pH, $pO_2$, $pCO_2$, metabolite, and electrolyte concentrations.

Certainly, real blood would be an appropriate fluid for use in perfusing the organ. It is envisioned, however, that artificial blood solutions would also be able to be employed in the device.

The invention also encompasses a method for transporting an organ for transplantation. Such a method would include the steps for excising the organ to be transplanted from its donor; cannulating and placing the organ in a housing suitable for holding the organ in a sterile state; transferring the housing into a transportation device without compromising the sterile state of the organ, the transporation device including means for delivering oxygenated blood to at least one cannulated vessel of the organ so that the blood is perfused through the tissue of the organ, means for connecting at least one of the cannulated vessels to means for delivering oxygenated blood, and means for recirculating and reoxygenating the blood which has perfused through the organ; and, finally, transporting the device containing the organ to a location at which the organ is to be transplanted into a recipient.

The invention is, thus, an improved apparatus and method for transporting an organ for transplantation. More specific features and advantages obtained in view of those features will become apparent with reference to the DETAILED DESCRIPTION OF THE INVENTION, appended claims, and accompanying drawing figures.

### Brief Description of the Figures

Fig. 1 is a flow diagram of the components of the preferred embodiment of the present invention;

Fig. 2a is an external perspective view, from a first angle, of the preferred embodiment of the present invention;

Fig. 2b is an external perspective view, from a second angle, of the preferred embodiment of the present invention;

Fig. 3 is an exploded view of the preferred embodiment of the present invention;

Fig. 4 is a schematic representation of the components included in the perfusion circuit of the preferred embodiment of the present invention; and

Fig. 5 is an elevational view of a portion of the organ housing, some portions thereof being broken away.

Description of the Preferred Embodiment

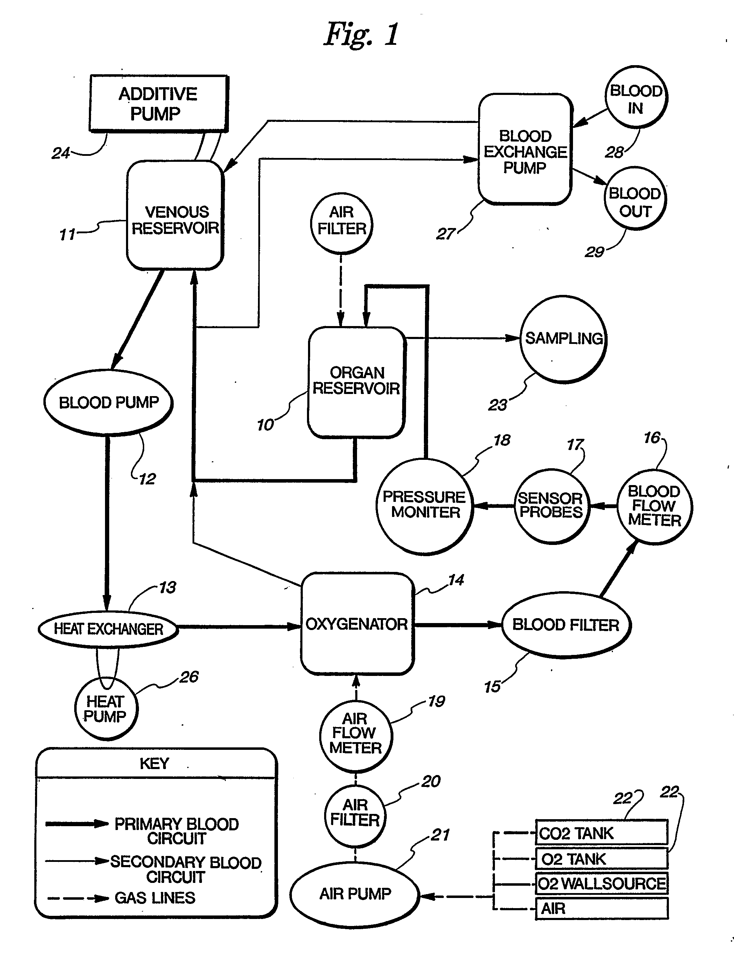

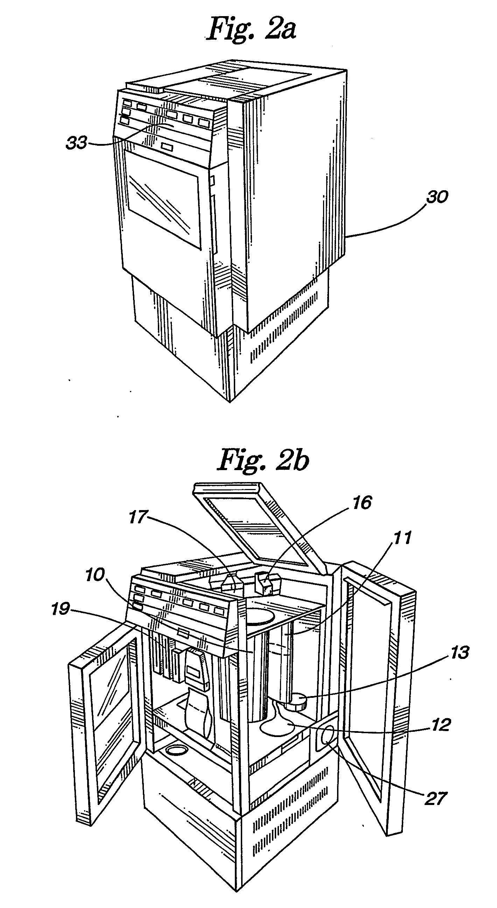

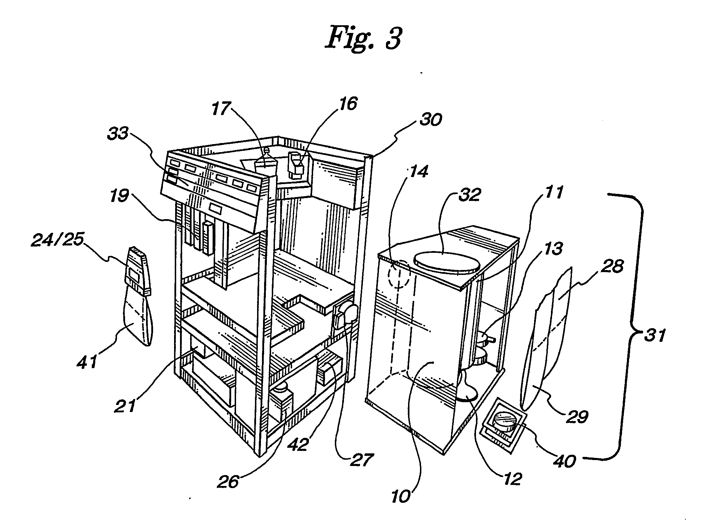

Fig. 1 illustrates a flow diagram of the various components of the preferred embodiment. Figs. 2 and 3 depict the components of the device as they are situated within a cabinet 30 of the preferred embodiment of the invention.

The components of the preferred embodiment of the present invention are divided into six basic sectors: perfusion, oxygenation, drug delivery, monitoring, temperature control and power. Some components of the preferred embodiment are included in more than one sector.

The perfusion sector or "perfusion circuit" includes the housing 10 which receives the organ, the venous reservoir 11, the blood pump 12, the heat exchanger 13, the oxygenator 14, the blood filter 15, the blood flow meter 16, the sensor probes 17, the pressure monitor 18, the temperature probe 25, the sampling conduit 23, the blood exchange pump 27, and reservoirs 28 and 29 (for holding blood passing into and out of, respectively, the perfusion circuit). As shown in Fig. 3, the organ housing or reservoir 10, the venous reservoir 11 (not visible), the blood pump 12, the heat exchanger 13, and the oxygenator 14 are included within a "transpack" removable organ unit 31.

In the preferred embodiment, the removable organ unit 31 is enclosed on the top and bottom and all but one side. The open side of the removable unit 31 allows access to, and manipulation of, the components contained within the unit. The organ housing or reservoir 10 and its lid 32 must be sterilized and assembled using aseptic techniques. The open side of unit 31 facilitates use of the device after these components 10, 32 have been so processed.

The removable organ unit 31 is wholly disposable in the preferred embodiment. The casing for the unit is made of plastic and the components contained therein are used only once since the United States federal Food and Drug Administration regulations so require.

Since the unit 31 is removable, the bulk of the device can be put aside, while the much smaller and more easily handled unit 31 can be taken directly to a location more proximate where the organ is to be excised. The removable organ unit 31 allows an organ to be harvested in the sterile field of an operation room, housed within the sterile organ reservoir 10, and placed into the removable organ unit 31. Only the reservoir 10 and its lid 32 are carried into the sterile field. The unit 31 is, thereafter, inserted into the parent device and connected to the rest of the system without compromising sterility.

The removable unit 31 also allows the transfer of an organ contained therein from one transportation device to another (e.g., where the organ is transferred from a portable hand-carried device to a larger non-portable device at the organ destination). In alternative embodiments, the removable organ unit 31 can be omitted and the components contained therein can be situated within the device in a "non-removable" manner.

The organ reservoir 10 is the central component of the apparatus in accordance with the present invention. In the preferred embodiment, the organ reservoir 10 is a cylindrical vessel normally opened at its top end. The vessel opens to the outside of the removable organ unit 31 throught the open top of the unit. The organ reservoir 10 can be provided with an outlet or drain hole (not shown) at its bottom so that blood, perfused through, and out of, the organ, which collects in the organ reservoir 10, is transferred to the venous reservoir 11 for later reoxygenation, recirculation, and reperfusion.

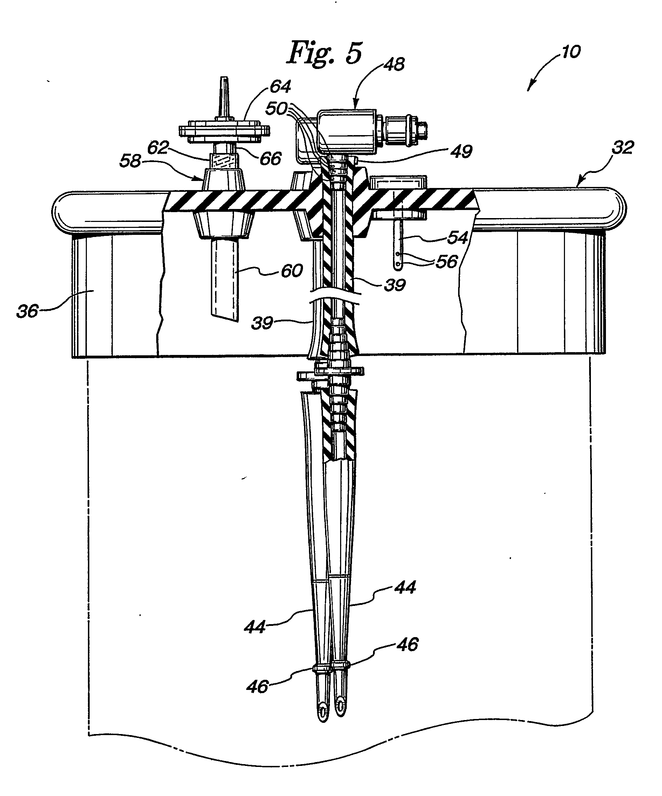

The organ reservoir 10 is fitted with a top closure wall or lid 32. In the preferred embodiment depicted in Fig. 5, the lid 32 forms a seal with the top of the organ reservoir 10. The seal is snug enough such that sterility of the interior of the organ reservoir 10 is maintained after the lid 32 is put in place.

Fig. 5 illustrates two tubes 39 which extend from the lid 32 into the organ reservoir 10. One tube will eventually be placed in fluid communication with the primary fluid circuit carrying nutrient-rich fluid from a line down-flow from the temperature probe 25. The other tube 39 is not in the perfusion circuit and serves no fluid delivery function. The other tube does, however, serve an organ support function as will be discussed hereinafter.

The end of each tube 39 is fitted with a cannula 44. Each cannula, proximate its lower extremity, is provided with an annular shoulder. In a case where the organ being transported is a heart, the aorta is cannulated by inserting the cannula, attached to the flexible tube 39 in the perfusion circuit, into the aorta. The heart is, thereafter, excised.

Another available vessel of the heart is cannulated by inserting the cannula attached to the other flexible tube 39 into any available vessel in the heart. As will be able to be seen then, in view of this disclosure, the cannulae attached to the tubes are inserted into different vessels of the heart.

With the cannulae so inserted, a suture is taken in the heart at locations immediately above each annular shoulder. By taking such sutures, withdrawal of the heart downwardly and away from the cannulae under the influence of gravity is precluded. The heart is, thereby, suspended by the cannulae within the organ reservoir 10.

Both tubes 39 extending downwardly within the organ reservoir 10 are made of an appropriate flexible, elastomeric material. Typically, the material from which the tubes 39 are formed is the same as that from which the lid 32 is formed. Although not an exclusive construction, the preferred embodiment of the invention envisions that the tubes 39 would be fused to the lid. By so bonding the tubes, a natural seal would be formed between them and the lid 32.

The tube 39 in the perfusion circuit is mated with a quick disconnect fitting 48. A boss 49 extending downwardly from the fitting 48 is provided with a series of steps or barbs 50. These steps 50 function, when the boss 49 is inserted into a stub 52 in registration with the tube 39, to form a tight seal and preclude easy withdrawal of fitting 48.

The boss 50 extends from a main body portion of the fitting 48. The fitting 48 is provided with a shut-off valve (not shown). The valve allows for sealing, maintenance of sterility, etc. when a tube in the perfusion circuit down-flow from the temperature probe 25 is not in a mated configuration with the organ reservoir 10.

Figure 5 also shows a probe 54 extending downwardly from the lid 32. The probe 54 is secured to the lid 32 in a sealing fashion and is set off from an axis interconnecting support tubes 39. Apertures 56 are provided at the lower end of the probe 54. If desirable or necessary, a suture can be taken in the organ being transported and run to and through one or more of these apertures 56. Because of the off-set of the probe from the axis between the tubes 39, triangular support can be afforded to the organ within the reservoir 10. As a result, swinging of the organ during transportation which might result from jostling, etc. is minimized. Consequent damage to the organ is commensurately minimized.

Figure 5 also shows a bleeder mechanism 58 mounted in lid 32. A stub tube 60 extends downwardly from lid 32 into the reservoir 10. Outside of the lid 32, and in registration with the stub 60, is a male luer fitting 62. Figure 5 shows a gas filter 64, having a female luer fitting 66 attached thereto, mated with the male luer lock fitting 62. As pressure build-up within reservoir 10 occurs, it can be relieved through the bleeder mechanism 58 and gas filter 64.

As seen in Figure 5, lid 32 can be provided with an axially-extending, flexible sleeve 36. Sleeve 36 tightly engages the outer surface of the cylindrical wall comprising reservoir 10. This tight engagement serves to maintain the seal between the lid 32 and the cylindrical wall of reservoir 10.

During operation of the device, the organ is suspended in the organ reservoir 10. As referred to above and described in more detail below, once the aorta of a heart is cannulated with the tube coming from the temperature probe 25, and another available vessel is cannulated with non-flow tube 39 in a sterile operating field, the heart is excised. Cannulation with the tube 39 serves the function of allowing the suspending of the heart within the organ reservoir 10 in a desired position.

It is an advantage of the device that the organ reservoir 10 can be taken directly to the operating table and the lid 32 completely removed for cannulation. In the preferred embodiment, the fact that the tubes 39 can be cut to length is also advantageous in that the tubes 39 can be made to a length that facilitates easy cannulation for suspension of the heart in the organ reservoir 10.

When the preferred embodiment is used in connection with a heart, the heart is, initially, perfused with blood by "retrograde perfusion" into the aorta. The oxygenated blood is brought into the heart through the aortic cannula. The pressure created by the perfusion system then forces the blood into the coronary sinuses and vasculatures, and "antegrade perfusion" then occurs. The blood drains into the right ventricle and is pumped out of the heart through the pulmonary artery into the organ reservoir where it is recirculated through the system.

During transport, the heart is also preferably submerged approximately fifty percent below the surface of the blood in the organ reservoir. The heart is thus buoyed and bathed decreasing the likelihood of tissue damage. The tubes and sutures suspending the heart should preferably be adjusted such that the heart is completely suspended in the blood bath and does not make contact with the surfaces of the organ reservoir which may cause additional tissue damage.

During operation of the device, the blood is oxygenated by the oxygenator 14 and then passes through the blood filter 15 and blood flow meter 16. pH, $pO_2$ and $pCO_2$ of the blood may then be measured by sampling or in other appropriate manners. Fluid pressure is measured as the blood passes through the pressure monitor 18, through the temperature probe section, and into the organ reservoir 10 for perfusion into the heart.

After perfusing the heart tissue, the blood is pumped out of the heart into the organ reservoir 10 where it is syphoned off to the venous reservoir 11. The blood pump 12 keeps the blood flowing from the venous reservoir 11 to the heat exchanger 13 where the blood is cooled or heated, as appropriate, before it is re-oxygenated and the cycle begins again.

The perfusion circuit also contains two secondary blood circuits. The first secondary blood circuit runs through the blood exchange pump 27. During operation of the device, it may become necessary to replenish some of the blood within the perfusion circuit. The blood flowing through the device can be constantly exchanged during the operation of the device at a rate of 100 ml/hour (i.e., 100 ml fresh heparinized blood is added to the perfusion circuit each hour and 100 ml of blood is removed each hour).

The blood exchange pump 27 shown in Fig. 1 syphons the prescribed volume of blood coming out of the organ reservoir 10 and disposes of it in the "blood out" reservoir 29. Concurrently, the blood exchange pump 27 pumps the prescribed volume of "replacement" blood from the "blood in" reservoir 28 and into the venous reservoir.

The blood pump 27 has two distinct halves, one of which is responsible for moving blood out of the perfusion circuit and the other for sending blood into the circuit. The blood exchange pump 27, in the preferred embodiment, is an Ismatek pump, Model 7624 (commercially available from Barnett Co., Barrington IL). In the preferred embodiment, the "blood in" reservoir 28 is charged with one liter of fresh blood for use during operation of the device.

The second secondary blood circuit runs from the oxygenator 14 to the venous reservoir 11. This path allows bubbles forming in the blood during oxygenation to be dissipated into the venous blood supply and not into the blood supply to the heart, thus diminishing or preventing the possibility of tissue damage.

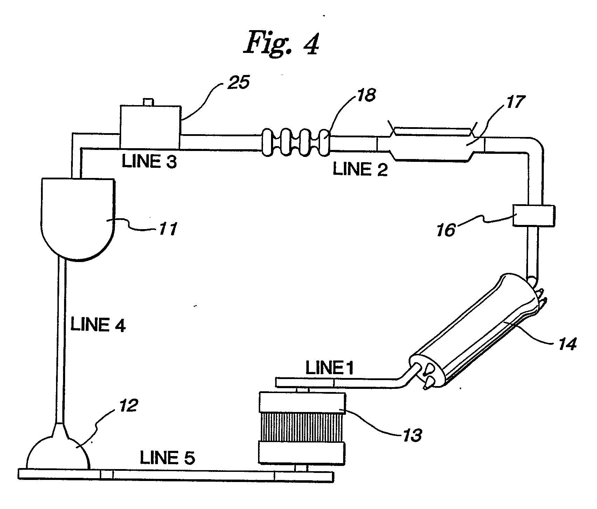

The other components of the perfusion circuit are ·joined together as shown schematically in Fig. 4, with the exception of the blood flow meter 16 which is not depicted. In the preferred embodiment, the blood flow meter 16 is located between the blood filter 15 and the sensor probes 17. The organ reservoir 10, which is not depicted, is located between the temperature probe 25 and the venous reservoir 11.

The venous reservoir 11 may be any container which can be adapted to perform the functions described herein. In the preferred embodiment shown in Fig. 3, the venous reservoir 11 is a blood bag. The bag is fitted with several tubes which take blood into and out of the bag in a manner as described herein.

The blood pump 12 of the preferred embodiment can be a Biomedicus BP50 Pediatric pump head (commercially available from Biomedicus, Minneapolis, MN) powered by a PMI Model 9FS 12 volt DC blood pump motor (commercially available from PMI, Commack, NY) 40. Motor speed and the resulting flow from the blood pump 12 can be controlled by the operator. This pump/motor combination is capable of delivering and maintaining a maximum flow rate of 300 ml/minute. It is important to note, however, that although flow rate is controlled, pressure is the physiologic factor that is actually being regulated. Any other type of blood pump (e.g., roller or peristaltic pumps) could be used as alternative, although less favored, embodiments.

The oxygenation sector includes the oxygenator 14, the air flow meter 19, an air filter 20, an air pump 21 and gas sources. The oxygenator 14 can be a 0.6 $m^2$ Scimed membrane oxygenator, Model 0600-2A (commercially available for Scimed, Minneapolis, MN).

In the preferred embodiment, the operator may choose from any of three sources of oxygen: (1) 35 liters of compressed $O_2$ provided as a portable tank 22; (2) standard operating room access ports; or (3) filtered ambient air. The operator may also choose to supply the blood with $CO_2$ to compensate for the oxygenator's efficiency with regard to $CO_2$ removal, and to control pH. The preferred embodiment envisions providing 35 liters of $CO_2$ from, for example, a portable tank 22.

Flow of the chosen gas source is passed through and monitored by the air flow meter 19. (An integral flow meter commercially available from Dwyer, Michigan City, IN can be used). The prescribed flow rate of gas then passes on to the oxygenator 14.

The drug delivery section includes the venous reservoir 11 and a pump 24 for the delivery of insulin and/or glucose. Since the organ is intended to maintain nearly its normal metabolic rate during transport, it may be necessary to supply insulin and glucose to the blood supply. This accomplished in the preferred embodiment by pump 24. A Pharmacia Deltec Model CADD-1 (commercially available from Pharmacia-Deltec, Arden Hills, MN) can be employed. The pump can be an independently powered infusion pump that administers glucose and insulin simultaneously. A supply of nutrients is provided in bags 41.

The monitoring sector includes the blood flow meter 16, the sensor probes 17, the pressure monitor 18, the temperature probe 25, the sampling conduit 23, and the monitor display panel 33. The blood flow meter 15 can be a Biomedicus Bio-Probe Transducer, Model TX20P. The pressure monitor 18 can be a Digidyne pressure monitor, transducer and alarm system (commercially available from Renal Systems, Minneapolis, MN). Blood gases (pH, $pO_2$, $pCO_2$) are measured by the sensor probes 17.

pH, $pO_2$, $pCO_2$, ca, K, and Na readings are displayed by LCDs on a monitor display panel 33. The monitor display panel 33 also contains LCD displays for blood temperature, fluid pressure, fluid flow and the water temperature in the heat pump 26.

The monitor display panel 33 displays warning lights for loss of fluid pressure, blood temperature variance outside of the prescribed range, blood exchange pump failure, air pump failure, blood pump failure, and low battery power. A bridge circuit (not shown) is provided to link outputs of the various sensors to their respective warning lights. In order to connect the Digidyne pressure monitor to the bridge circuit, the alarm portion of the Digidyne circuit is disabled. The Digidyne circuit is also altered such that upper and lower pressure limits can be set independently. The monitor display panel 33 also has a switch that engages or disengages the pumping circuit, depending on whether the switch is set on "operation mode" or "stand-by mode", respectively.

The temperature control sector includes the heat exchanger 13 and the heat pump 26. In the preferred embodiment, blood temperature is controlled by the heat pump 26 which can be a DC-powered Seabrook water heater and pump, Model SMS-2000 (commercially available from Seabrook Labs, Cincinnati, OH).

The heat pump 26 provides water at a constant temperature, the water being interfaced with the blood circuit through the heat exchanger 13. In the preferred embodiment, the heat exchanger is a Dideco exchanger, Model 720 HELIOS (commercially available from Dideco, Englewood, CA). Blood temperature is maintained at 32° C plus or minus 2° during operation of the invention.

The power section can be actuated by appropriate means such as either an integral AC power supply or a Ag-Zn Eagle Pitcher 12 volt battery, Model MAR 4352-7. Many other 12 volt batteries could be used in alternative embodiments. In the preferred embodiment, the battery may be recharged up to 15 times, after which it would, typically, be replaced.

The operator may alternate between power sources 42 without adversely affecting the operation of the device. The battery of the preferred embodiment is capable of providing 80 A/hour at 12 volts and approximately five hours of independent operation. The monitor display panel 33 is shown as having a switch which allows the operator to chose between AC and DC power supply.

## Example

Th following example demonstrates the operation of the preferred embodiment of the present invention.

The following materials were gathered for preparation and operation of the device:

(1) 1000 cc frozen plasma and recipient-matched red cells, to which, for each 500 cc, the following was added: Gentamycin, 20 mg (1/4 cc); Cleocin, 75 mg (1/2 cc); Dextrose, 600 mg; Methylprednisalone, 100 mg (1.0 cc or 2 cc Ibuprofen).

(2) Perfusion prime, consisting of 1.5 liters of heparinized frozen plasma and red cells, to which the following was added: $NaHCO_3$, 10-15 mEq; Cleocin, 150 mg; Gentamycin, 40 mg; KCl, 1 mEq; CaCl 20 mg; d-ribose, 250 mg/liter; insulin, 20 IU. Protein content was then adjusted to 6 g/dl of total solution and serum glucose levels and q.s. for 250 mg/dl was calculated.

(3) An empty sterile IV bag, to which the following was added: 42 ml 25% glucose; 20 IU regular insulin. $H_2O$ was added q.s. to 110 ml.

The heat pump heater reservoir was filled with distilled water. The device was then connected to a 110/220V AC power supply and switched to "stand-by" mode. The removable organ unit was then placed into the device, and the heat exchanger and heat pump were connected with tubing. The appropriate gas source was then connected by tubing to the air pump, and the air flow meter was connected to the inlet port on the oxygenator. Lines 1-5 as shown in Fig. 4 were then connected with tubing.

A bag of "replacement" blood and an empty blood bag were hung on the rear panel of the device cabinet for use as the "blood in" and "blood out" reservoirs, respectively. The bags were connected to the in and out lines of the Ismatek pump cartridge, and the cartridge was attached to the Ismatek pump.

The previously-prepared "empty" bag ((3) above) was hung inside the front panel of the device. The bag was attached to the Deltec cassette, the tubing line was primed, and a delivery rate of 10cc/hour was set. The distal tubing connector was then attached to another empty blood bag which was to be used as the venous reservoir.

The distal end of the pressure monitor line was connected to an air filter and the filter was connected to the inlet receptacle of the Digidyne pressure monitor. The in-line flow cell of the Biomedicus blood flow meter was then snapped into place.

The device was then primed according to the following procedure. The inlet and outlet tubes on the boom of the venous reservoir were clamped. The venous reservoir was then filled with the 1000 cc of treated plasma/red cells ((1) above).

The Biomedicus pump head was clamped at the outlet. The venous reservoir outlet clamp was then released to prime the Biomedicus pump head. The pump head was slid into its receptacle and locked into place. The device was switched from the "stand-by" made to the "operation" mode. The inlet port on the venous reservoir was unclamped. All other clamps in the primary blood circuit were then released. Recirculation was continued until the blood was conditioned (i.e., at $32^{\circ}$C). The lines were all checked for bubbles during the conditioning period.

The master regulator valves were then opened on the $O_2$ and $CO_2$ cylinders, adjusting the delivery rates on the flow meter as required. The CDI sensor probe was connected and calibrated (according to the CDI instruction manual). Recirculation was discontinued by switching the device to the "stand-by" mode. Both segments of the arterial-venous line (recirculation configuration) were clamped and disconnected. The arterial line was recapped with a sterile cap. The venous line was then connected to the outlet port on the organ reservoir. The venous line was then unclamped, and filling was allowed until the desired level in the organ reservoir was reached. The Biomedicus flow meter was then reset by turning the calibration to "0".

The donor organ (a canine heart) was then cannulated in-situ and cannulae were connected to the tubing of a sterile organ reservoir lid assembly. The Tyvak organ reservoir sterile barrier (i.e., lid) was removed and the organ was aseptically transferred to the organ reservoir. The lid assembly was then secured and the tubing length was adjusted to place the heart at the desired level in the organ reservoir. The tube leading into the aorta was then connected to the tube bringing oxygenated blood from the pressure monitor. All lines were then unclamped, and the device was placed in the "operation" mode.

Preferably, all component-to-component connections described above which involve the transfer of fluid or gas are made with silicone tubing. Other appropriate tubing or connecting materials are well known in the art and can be used where appropriate and conducive to the medium being conveyed thereby.

Although the embodiment described might use real blood to perfuse the organ, other fluids can be substitued. Any fluid which can provide the desired characteristics as a perfusate (i.e., carry gases and provide nutrients; e.g., "artificial" blood) may be used in practicing the present invention.

Although the preferred embodiment described herein is specifically tailored for transportation of a heart, it should also be noted that the device of the present invention includes structures for transportation of other organs including kidneys, livers, lungs, etc. The features and principles described in relating the preferred embodiment can be easily modified by those skilled in the art to accommodate other organs (e.g., by increasing or decreasing the size of the organ reservoir for a larger or smaller organ, by altering the gases and nutrients delivered by the perfusate, etc.). Some organs other than the heart may also require monitoring of additional parameters not monitored by the described embodiment, or to provide additional nutrients or metabolites not provided by the described embodiment. The present invention is intended to include means for monitoring those additional parameters and for providing such additional nutrients and metabolites, since such means are includable into the design disclosed herein by those skilled in the art.

Numerous characteristics and advantages of the invention covered by this document have been set forth in the foregoing description. It will be understood, however, that this disclosure is, in many respects, only illustrative. Changes may be made in details, particularly in matters of size, shape, and arrangement of parts, without exceeding the scope of the invention. The invention's scope is, of course, defined in the language in which the appended claims are expressed.

## Claims

1. Apparatus for transporting an organ for transplantation, comprising:
a housing for receiving and holding the organ therewithin in a sterile condition during transport;
means for delivering a nutrient-rich, oxygenated fluid to the organ to perfuse therethrough; and
means for maintaining the organ at near-normal thermic conditions and metabolic rates during transport.

2. Apparatus in accordance with claim 1 wherein said delivery means comprises means for recirculating and reoxygenating fluid which has perfused through the organ, wherein the recirculated fluid is repeatedly perfused throught the organ.

3. Apparatus in accordance with claim 1 wherein said delivery means comprises means for cannulating the organ to introduce said fluid therein.

4. Apparatus in accordance with claim 2 wherein said housing has a generally cylindrical side wall, a substantially planar floor, and a substantially planar upper wall, said delivery means further comprising a flexible tube affording fluid passage through said upper wall, and having a distal end carrying a cannula for insertion into the organ for cannulation thereof.

5. Apparatus in accordance with claim 4 further comprising means for affording passage of said fluid through said upper wall and into said flexible tube.

6. Apparatus in accordance with claim 5 further comprising means for suspending the organ within said housing, said suspension means comprising said flexible tube.

7. A device for transporting an organ for transplantation, comprising:
an organ reservoir suitable for holding said organ in an uncompromised sterile state during cannulation and transport of said organ;
means for delivering oxygenated blood to at least one cannulated vessel of the organ such that said oxygenated blood is perfused through the tissue of said organ; and
means for recirculating and reoxygenating the blood which has perfused through said organ such that the recirculated blood is again perfused through said organ.

8. A method of transporting an organ for transplantation, said method comprising:
excising said organ from its donor;
cannulating and placing said organ in an organ reservoir suitable for holding said organ in a sterile state;
transferring said reservoir into a transportation device without compromising said sterile state, said device comprising:
means for delivering oxygenated blood to at least one cannulated vessel of said organ such that said oxygenated blood is perfused through the tissue of said organ;
means for connecting said at least one cannulated vessel to said means for delivering oxygenated blood; and
means for recirculating and reoxygenating the blood which has perfused through said organ such that the recirculated blood is again perfused through said organ; and
transporting said device containing said organ.

9. A device for transporting an organ for transplantation, said device comprising:
an organ reservoir suitable for holding said organ in an uncompromised sterile state during cannulation and transport of said organ; and
means for delivering an oxygenated fluid to at least one cannulated vessel of the organ such that said oxygenated fluid is perfused through the tissue of said organ.

10. The device of claim 9 wherein said device further comprises:

means for recirculating and reoxygenating said fluid which has perfused through said organ such that the recirculated fluid is again perfused through said organ.

11. The device of claim 9 wherein said means for delivering oxygenated blood comprises a pump in fluid communication with said organ.

12. The device of claim 11 wherein said pump is connected to said organ such that blood enters the interior of said organ and perfuses through said organ, initially, by retrograde perfusion and, thereafter, by antegrade perfusion.

13. The device of claim 10 wherein said means for recirculating and reoxygenating comprises an oxygenator.

14. The device of claim 13 wherein said means for recirculating and reoxygenating further comprises a pump which causes blood to flow through said oxygenator such that said blood becomes reoxygenated.

15. The device of claim 10 wherein said device further comprises means for monitoring the flow volume of blood through said device.

16. The device of claim 6 wherein said device further comprises means for monitoring the blood flow pressure through said device.

17. The device of claim 6 wherein said device further comprises means for monitoring the pH of blood flowing through said device.

18. The device of claim 6 wherein said device further comprises means for monitoring the $pO_2$ of blood flowing through said device.

19. The device of claim 6 wherein said device further comprises means for monitoring the $pCO_2$ of blood flowing through said device.

20. The device of claim 6 wherein said device further comprises means for monitoring the temperature of blood flowing through said device.

21. The device of claim 6 wherein said device further comprises means for adjusting the concentration of a metabolite in blood flowing through said device.

22. The device of claim 21 wherein said metabolite is selected from the group consisting of glucose and insulin.

23. A method of transporting an organ for transplantation, said method comprising:
cannulating and placing said organ in an organ reservoir suitable for holding said organ in a sterile state; and
transferring said reservoir into a transportation device without compromising said sterile state, said device comprising:
means for delivering an oxygenated fluid to at least one cannulated vessel of the organ such that said oxygenated fluid is perfused through the tissue of said organ; and
means for connecting at least one cannulated vessel to said means for delivering said oxygenated fluid.

24. The method of claim 23 wherein said method further comprises excising said organ from its donor prior to cannulating said organ.

25. The method of claim 23 wherein said method further comprises transporting said device containing said organ.

26. The method of claim 23 wherein said fluid is human blood.

27. The method of claim 23 wherein said fluid is an artificial blood.

## Fig. 1

## Fig. 2a

## Fig. 2b

# Fig. 3

*Fig. 4*

Fig. 5